# EUROPEAN PATENT APPLICATION

(11) **EP 1 162 417 A1**
(43) Date of publication of application: **12.12.2001**
(21) Application number: 00906648.1
(22) Date of filing: 02.03.2000
(51) Int. Cl.: F25B 41/06, F16K 31/68

(54) **EXPANSION VALVE**

(30) Priority: 17.03.1999 JP 7281399
(71) Applicant: Zexel Valeo Climate Control Corporation, Ohsato-gun, Saitama 360-0193 (JP)
(72) Inventor: Sakurada, Muneo, Zexel Valeo Climate Control Corp., Osato-gun, Saitama 360-0193 (JP)
(74) Representative: Goddar, Heinz J.
(86) International application number: JP0001251
(87) International publication number: WO0055553

(57) **Abstract**

To provide an expansion valve capable of controlling opening characteristics according to an environmental load condition with simple constitution based on a mechanical expansion valve, a support unit for supporting a coil spring from below at the bottom of the mechanical expansion valve is a control nut which moves vertically in the bottom portion of a valve body with a screw mechanism, urging force applied to the coil spring is controlled by driving the above control nut by a stepping motor to change the opening of the valve 5 stepwise, and environmental load detection means comprising an outside air thermosensor is provided to control urging force applied to the above coil spring according to a load condition detected by the above environmental load detection means.

## Description

### Background of the Invention

### [Field of the Invention]

The present invention relates to the structure of an expansion valve for use in the refrigerating cycle of an air conditioner or refrigerator.

### [Description of the Prior Art]

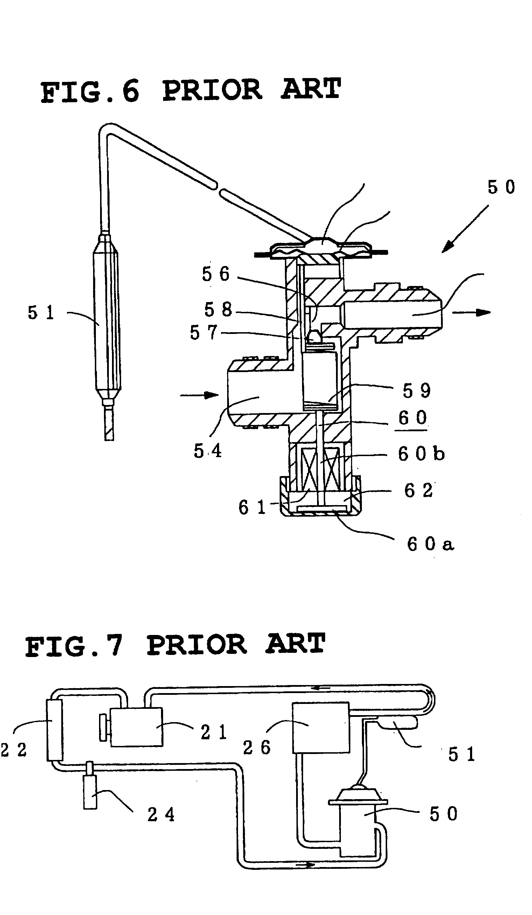

Fig. 6 shows the constitution of a conventional mechanical expansion valve disclosed in Japanese Laid-open Patent Application No. 61-105066, for example, and Fig. 7 shows the location of the above expansion valve in a refrigerating cycle. In Fig. 6 and Fig. 7, numeral 21 denotes a compressor, 22 a condenser, 24 a receiver tank, 50 an expansion valve, 26 an evaporator and 51 a thermosensitive cylinder provided on the outlet side of the evaporator 26.

The conventional expansion valve 50 comprises a pressure chamber 52 filled with a refrigerant whose pressure is changed by temperature variations in the above thermosensitive cylinder 51, diaphragm 53 which moves vertically according to the above pressure change, inlet passage for introducing a high-pressure liquid refrigerant supplied from the outlet of the condenser 21, orifice 56, interposed between the above inlet passage 54 and an outlet passage 55, for adiabatically expanding the high-pressure liquid refrigerant, valve 57 for adjusting the opening of the above orifice 56, valve rod 58 connected to the above diaphragm 53, coil spring 59 for urging the valve 57 in a closing direction, and effector 60 for supporting the coil spring 59. The above effector 60 comprises a rod 60b whose distal end is connected to the coil spring 59 and whose proximal end is fixed to a seat 60a, and a electromagnet 60 for vertically moving this rod 60b and is stored in a storage chamber 62 formed below the above inlet passage 54 and separate from the above inlet passage 54.

A description is subsequently given of the operation of the expansion valve.

The thermosensitive cylinder 51 provided on the outlet side of the evaporator 26 is connected to the pressure chamber 52 so that the pressure of the above pressure chamber 52 changes according to the temperature of the outlet side of the evaporator 26. When the temperature of the outlet side of the evaporator 26 is high, the pressure of the pressure chamber 52 rises and the diaphragm 53 expands downward. Therefore, the valve rod 58 descends in defiance of the spring force of the coil spring 59 to force down the valve 57, thereby increasing the opening of the orifice 56. On the other hand, when the temperature of the outlet side of the evaporator 26 is low, the pressure of the pressure chamber 53 falls, whereby the expansion force of the coil spring 59 becomes larger and the valve 57 is forced up, thereby reducing the opening of the orifice 56.

The above electromagnet 61 is connected to an unshown thermister and amplifier provided within the evaporator 26 so that when the output (temperature) of the thermister exceeds the working set value (set temperature, for example, 5°C) set in the above amplifier, the electromagnet 61 is energized and the seat 60a of the above rod 60b is sucked so that the coil spring 59 is urged upward by the above rod 60b. When the temperature of the evaporator 26 is higher than the above working set temperature as in the initial cooling operation, the above electromagnet 61 is energized and the valve 57 urging force of the coil spring 59 is enhanced to reduce the opening of the orifice 56, the energization of the above electromagnet 61 is suspended during the cooling operation stabilization period, and the coil spring 59 urging force of the effector 60 is released to control the opening of the orifice 56 according to the spring force of the coil spring 59 and the pressure of the pressure chamber 52.

However, the above conventional expansion valve involves such problems that the processing of the body is complicated as the effector storage chamber 62 for storing a solenoid as the effector 60 must be provided and that hunching readily occurs during the control of urging force of the coil spring 59 as the opening and closing of the expansion valve are carried out by turning on and off the solenoid through feed-back control.

Further, since the opening and closing of the expansion valve are controlled based on the air temperature of the outlet side of the evaporator 26 alone and the environmental load of the refrigerating cycle is not taken into consideration in the above expansion valve, the opening cannot be controlled according to load.

When an electronic expansion valve whose opening is adjusted by electronically controlling a linear motor is used, it is possible to carry out the opening and closing of the expansion valve continuously and smoothly. However, the electronic expansion valve has a larger number of parts and its control is more complicated than the mechanical expansion valve, the system becomes bulky and also expensive.

### Summary of the Invention

It is an object of the present invention which was made in view of the above problems of the prior art to provide an expansion valve whose opening characteristics can be controlled according to the condition of an environmental load with simple constitution based on a mechanical expansion valve.

According to a first aspect of the present invention, there is provided an expansion valve which comprises means of detecting the environmental load of a refrigerating cycle and means of controlling urging force applied to the above coil spring according to the detected load to control the opening characteristics of the expansion valve.

According to a second aspect of the present invention, there is provided an expansion valve which is connected to an actuator for driving the above control means.

According to a third aspect of the present invention, there is provided an expansion valve in which the characteristics of the expansion valve are controlled stepwise.

According to a fourth aspect of the present inventor, there is provided an expansion valve in which the actuator for driving the control means is a stepping motor.

According to a fifth aspect of the present invention, there is provided an expansion valve in which the rotor of the stepping motor is built in the expansion valve.

The above and other objects, advantages and features of the present invention will become more apparent from the following description when taken into conjunction with the accompanying drawings.

### Brief Description of the Accompanying Drawings

Fig. 1 is a schematic diagram of the refrigerating cycle of a car air conditioner according to Embodiment 1 of the present invention;
Fig. 2 is a diagram showing the constitution of an expansion valve according to Embodiment 1 of the present invention;
Fig. 3 is a diagram for explaining the operation of the expansion valve according to Embodiment 1 of the present invention;
Fig. 4 is a diagram showing the opening characteristics of the expansion valve;
Fig. 5 is a diagram showing the constitution of an expansion valve according to Embodiment 2 of the present invention;
Fig. 6 is a diagram showing the constitution of a conventional expansion valve; and
Fig. 7 is a diagram showing the location of the conventional expansion valve in the refrigerating cycle.

### Detailed Description of the Preferred Embodiments

Preferred embodiments of the present invention will be described with reference to the accompanying drawings hereinbelow.

### Embodiment 1

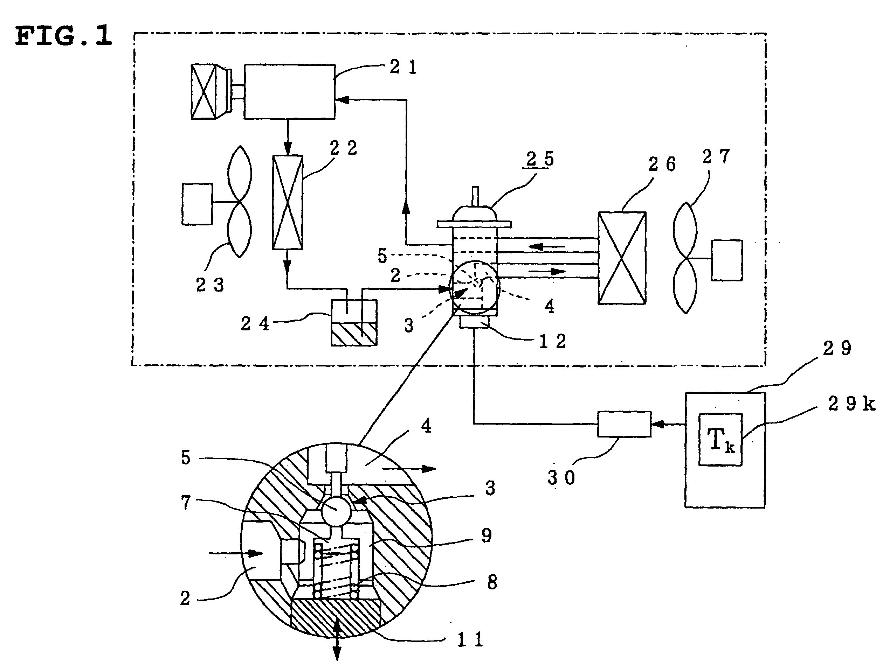

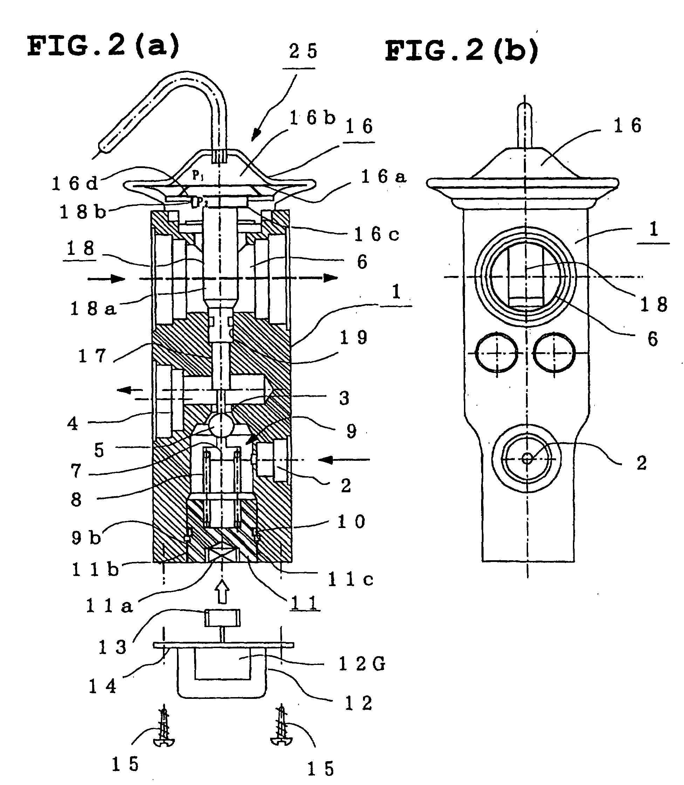

Fig. 1 is a schematic diagram of the refrigerating cycle of a car air conditioner according to Embodiment 1 of the present invention. In the figure, reference numeral 21 denotes a compressor, connected to an unshown engine by an electromagnetic clutch, for compressing an introduced low-pressure refrigerant and discharging it as a high-temperature and high-pressure gas refrigerant, 22 a condenser for cooling and condensing the above gas refrigerant through heat exchange with air supplied by a condenser fan 23, 24 a receiver tank for separating the refrigerant which has been condensed such that its gas phase and liquid phase have been mixed together into a gas phase and a liquid phase, 25 an expansion valve for expanding the high-temperature and high-pressure liquid refrigerant supplied from the above receiver tank 24 adiabatically to change it into a low-temperature and low-pressure refrigerant, and 26 an evaporator for heating the above low-temperature and low-pressure refrigerant through heat exchange with air supplied by an air conditioning fan 27 to evaporate it. Denoted by 29 is environmental load detection means which comprises an outside air thermometer 29k installed near the bumper of a vehicle and detects the environmental load condition of a refrigerating cycle based on an outside air temperature Tk detected by the outside air thermometer 29k, and 30 a motor drive unit for driving a stepping motor 12 which is an actuator, mounted to the above expansion valve 25, for driving means of controlling the opening characteristics of the expansion valve (control nut 11 in Fig. 2 to be described hereinafter) according to a load condition output from the above environmental load detection means 29.

Fig. 2(a) shows the constitution of the expansion valve 25 and Fig. 2(b) is a side view of a valve body 1. For the convenience of explanation, Fig. 2(a) is a longitudinal sectional view of the valve body 1 alone. The aluminum prismatic valve body 1 has an orifice 3, interposed between an inlet passage 2 for introducing a high-temperature and high-pressure liquid refrigerant supplied from the outlet side of the condenser 22 through the receiver tank 24 and an outlet passage 4 connected to the inlet passage 2 and the inlet side of the evaporator 26, for expanding the high-pressure liquid refrigerant adiabatically, a ball valve 5 (to be called "valve" hereinafter) for controlling the opening of the orifice 3, and a low-pressure passage 6, connected to a pipe on the outlet side of the evaporator 26, for passing the refrigerant supplied from the outlet side of the evaporator 26.

The orifice 3 is an opening formed along the center axis of the valve body 1 having a trapezoidal sectional form, and a valve chamber 9 for storing a valve unit consisting of the valve 5, a block valve member 7 for supporting the valve 5 from below and a coil spring 8 whose one end is connected to the above valve member 7 is formed below the refrigerant inlet side located below the orifice 3. The coil spring 8 is a compression spring which urges the above valve 5 in the closing direction of the above orifice 3, that is, upward direction. The bottom of the above valve chamber 9 is sealed up by an O ring 10 and a control nut 11 having a hexagonal hole which is means of controlling the opening characteristics of the expansion valve by adjusting the urging force of the above coil spring 8. The other end of the above coil spring 8 is contacted to the top of the above control nut 11, that is, the side opposite to the hexagonal hole 11a of the above control nut 11.

A thread 11b is formed on a lower portion of the side surface of the above control nut 11 and mated with a threaded hole 9b formed in the bottom of the valve chamber 9 of the valve body 1. Therefore, the length of the coil spring 8, that is, urging force can be controlled by the insertion position of the above control nut 11. The above O-ring 10 is mounted to the position of a groove 11c formed in an upper portion of the side surface of the control nut 11.

Numeral 12 denotes a stepping motor for driving a hexagonal wrench 13 inserted into the hexagonal hole 11a of the above control nut 11 to turn the above control nut 11 through the gear unit of a gear box 12G so as to adjust the insertion position of the control nut 11, which is mounted to the valve body 1 from the bottom side of the valve body 1 by means of fixing screws 15 through a fixing flange 14 for fixing the gear box 12G integrally connected to the stepping motor 12.

Meanwhile, a hole 19 for storing a working rod 17 for urging the above valve 5 in the opening direction of the orifice 3, that is, downward direction by the function of a diaphragm unit 16, which is contacted to the top of the valve 5 and will be described hereinafter and a thermosensitive rod 18 connected to the above working rod 17 and extending upward from the working rod 17 is formed across the above low-pressure passage 6 above the refrigerant outlet side located above the orifice 3. The center portion (thermosensitive portion) 18a of the above thermosensitive rod 18 is located in a portion where the hole 19 intersects the above low-pressure passage 6 to detect the temperature of the refrigerant supplied from the outlet side of the evaporator 26 and passing through the low-pressure passage 6 and one end (lower end) thereof is fixed to the working rod 17 and the other end (upper end) thereof is fixed to the diaphragm unit 16.

The diaphragm unit 16 is provided above the low-pressure passage 6 of the valve body 1 and consists of a metallic diaphragm 16a, an upper pressure chamber 16b and a lower pressure chamber 16c separated by the above diaphragm 16a, and a stopper portion 16d which serves as the receiving portion of the above diaphragm 16a on the lower pressure chamber 16c side of the above diaphragm 16a. The above upper pressure chamber 16b is filled with a diaphragm drive medium to which the heat of the refrigerant vapor running through the above low-pressure passage 6 is transmitted through the thermosensitive rod 18 so that pressure P1 corresponding to the temperature of the above diaphragm drive medium is applied to the upper side of the diaphragm 16a by the heat. On the other hand, the lower pressure chamber 16c is communicated with the low-pressure passage 6 so that the pressure P2 of the above refrigerant vapor is applied to the lower side of the diaphragm 16a.

The diaphragm unit 16 is connected to the upper portion of the above thermosensitive rod 18 on the rear side (lower side) of the above stopper portion 16d so that the diaphragm 16a is displaced according to a difference between the pressure P1 of the upper pressure chamber 16b and the pressure P2 of the lower pressure chamber 16c to change urging force applied to the above working rod 17 through the above thermosensitive rod 18 so as to control the position of the valve 5. The diameter of the upper portion 18b of the above thermosensitive rod 18 is formed larger than the diameter of the above center portion 18a so that the thermosensitive rod 18 can move vertically in the lower pressure chamber 16c.

When the temperature of the outlet side of the evaporator 26 is high, the pressure P1 of the upper pressure chamber 16b rises and the diaphragm 16a expands downward. Therefore, the working rod 17 connected to the above thermosensitive rod 18 descends in defiance of the spring force of the coil spring 8 to force down the valve 5, thus increasing the opening of the orifice 3. Thereby, the supply of the refrigerant to the evaporator 26 increases and the temperature of the evaporator 26 drops. On the other hand, when the temperature of the outlet side of the evaporator 26 is low, the pressure P1 of the upper pressure chamber 16b falls, whereby the expansion force of the coil spring 8 becomes larger and the valve 5 is forced up, the opening of the orifice 56 is reduced, and the temperature of the evaporator 26 rises.

When the hexagonal wrench inserted into the hexagonal hole 11a of the control nut 11 is turned by driving the stepping motor 12 at this point, the above control nut 11 is turned. Since the above control nut 11 is mated with the threaded hole 9b formed in the bottom of the valve chamber 9 of the valve body 1, the above control nut 11 moves along the threaded hole 1b in an upward direction to apply urging force to the coil spring 8. When the control nut 11 is moved in a downward direction, urging force applied to the coil spring 8 is weakened.

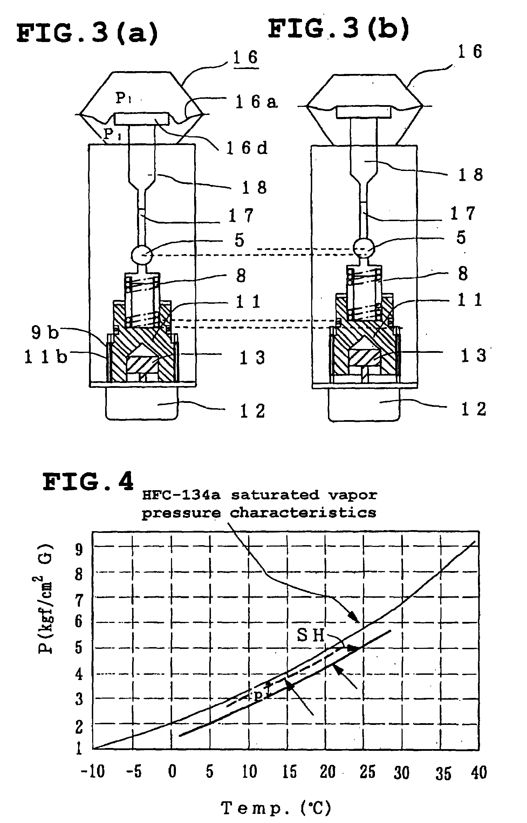

Figs. 3(a) and 3(b) are typical diagrams showing the positions of the valve 5 when the position of the above control nut 11 is moved by driving the stepping motor 12. Fig. 3(a) shows that the above control nut 11 is pulled down to the bottom and urging force applied to the coil spring 8 is the smallest and Fig. 3(b) shows that the control nut 11 is lifted up to the top and urging force applied to the coil spring 8 is the largest.

Fig. 4 is a graph showing characteristic curves indicative of the characteristics of the saturated vapor pressure of the diaphragm driving medium (HFC-134a) and the relationship between the temperature of the outlet side of the evaporator 26 and the pressure P1 of the upper pressure chamber 16b when the expansion valve is opened (to be referred to as "valve opening characteristics or static superheat characteristics"). The difference temperature between the characteristics of the above saturated vapor pressure and the above valve opening characteristics is determined by the spring force of the coil spring 8 and called "static superheat (SH)".

As described above, the expansion valve 25 of the present invention controls the position of the coil spring 8 by changing the rotation angle of the hexagonal wrench 13 by driving the above stepping motor 12 to control the value of static superheat of the above valve opening characteristics. In the figure, the valve opening characteristics A show a characteristic curve at the time of a low load, for example, in a liquid backflow prevention mode when the compressor 21 is operated intermittently and the valve opening characteristics B show a characteristic curve at the time of a high load. The optimum efficiency operation mode is existent between the above valve opening characteristics A and B.

In Embodiment 1 of the present invention, the opening characteristics of the expansion valve 25 are controlled stepwise according to the output of the environmental load detection means 29, and the environmental load detection means 29 detects the environmental load condition of the refrigerating cycle based on an outside air temperature Tk detected by the outside air thermometer 29k and drives the stepping motor 12 based on the detected load to control the insertion position of the control nut 11 for controlling urging force applied to the above coil spring 8 so as to adjust the opening characteristics of the expansion valve. For instance, since the environmental load of the refrigerating cycle is high in summer when the outside air temperature Tk is high, as shown in Fig. 3(a), urging force applied to the coil spring 8 is reduced to move the valve opening characteristics of the expansion valve in the direction B in Fig. 4 to increase the supply of the refrigerant to the evaporator 26. When the environmental load is low, as shown in Fig. 3(b), urging force applied to the coil spring 8 is reduced to move the valve opening characteristics of the expansion valve in the direction A in Fig. 4.

Although a linear motor may be used in place of the above stepping motor 12 to control the opening of the expansion valve 25, the 3- or 4-step control of the opening of the expansion valve 25 based on the environmental load suffices, a small-sized, easy-to-control and inexpensive stepping motor is desirably used.

According to Embodiment 1 of the present invention, the support unit for supporting the coil spring 8 from below at the bottom of the mechanical expansion valve is formed of the control nut 11 which moves vertically in the bottom portion of the valve body 1 by the screw mechanism, the expansion valve 25 capable of changing the opening of the valve 5 stepwise is constituted such that urging force applied to the coil spring is controlled by driving the above control nut by means of the stepping motor, and further the environmental load detection means 29 having the outside air thermosensor 29k is provided to control urging force applied to the above coil spring 8 according to the load condition detected by the above environmental load detection means 29. Therefore, the opening characteristics of the expansion valve 25 can be controlled according to the environmental load condition with simple constitution based on the mechanical expansion valve.

Since the position of the coil spring 8 is controlled stepwise according to the above load, the opening characteristics of the above expansion valve 25 can be controlled more stably than feed-back control by turning on and off the solenoid of the conventional expansion valve.

While the refrigerating cycle of the car air conditioner has been described in the above Embodiment 1, the expansion valve of the present invention is also effective when it is used for the other refrigerating cycle of a refrigerator or the like.

Although a linear motor may be used in place of the above stepping motor 12 to control the opening of the expansion valve 25, the 3- or 4-step control of the opening characteristics of the expansion valve 25 based on an environmental load suffices. Therefore, a small-sized, easy-to-control and inexpensive stepping motor is desirably used.

### Embodiment 2

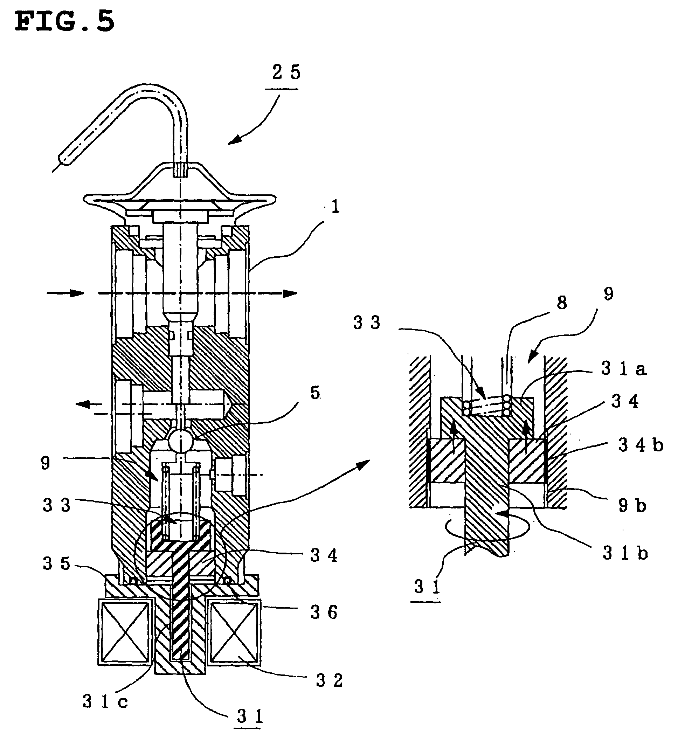

In the above Embodiment 1, the stepping motor 12 is external to the mechanical expansion valve. As shown in Fig. 5, only the rotor 31 of the stepping motor 12 is built in the bottom of the valve chamber 9 of the valve body 1 and turned by a stator 32 external to the valve body 1 to control the position of the coil spring 8, thereby making it possible to further reduce the size of the expansion valve. The rotor 31 comprises a block support member 31a having a groove 33 for storing the lower portion of the coil spring 8 and a rod-like shaft 31b extending downward through the center portion of the stator 32 from the above support member 31a, and the above hexagonal nut 34 having a thread 34a formed on the peripheral surface is situated below the above support member 31a of the shaft 31b. This hexagonal nut 34 is screwed into the threaded hole 9b formed in the bottom of the valve chamber 9 of the valve body 1. A rotor attachment member 35 for storing the moving portion 31c of the above rotor 31 is fixed to the bottom of the above valve chamber 9 through an O rig 36 to maintain the air-tightness of the valve body 1.

When the rotor 31 is turned by energizing the stator 32, the hexagonal nut 34 mated with the above rotor 31 is moved upward, for example, while it is turned along the threaded hole 9b to apply urging force to the coil spring 8. When the hexagonal nut 34 is moved downward, urging force applied to the coil spring 8 is weakened.

Since the rotor 31 moving vertically has no O ring in this Embodiment 2, air-tightness can be secured without fail.

Since the rotor 31 comprising the support member 31a and the shaft 31b both of which are integrated with each other is used in the above Embodiment 2, rotation force is applied to the coil spring 8 stored in the above support member 31a. However, since the coil spring 8 is not fixed to the above support member 31a, even when it is turned, its influence is rare. Since the valve 5 is spherical and not integrated with the valve member 7, even when the coil spring 8 is turned, its influence is rare. If the support member 31a and the shaft 31b are separate from each other, the support member 31a will not turn, thereby making it possible to eliminate the influence of rotation upon the coil spring 8 stored in the above support member 31a. Also in Embodiment 1, the control nut 11 may be divided into a support member and a rotation member.

### Industrial Feasibility

Since means of detecting the environmental load of the refrigerating cycle and means of controlling urging force applied to the above coil spring according to the detected load are provided to control the opening characteristics of the expansion valve as described above, the opening characteristics of the expansion valve can be suitably controlled according to the environmental load condition.

Since an actuator for driving the above control means is connected to the expansion valve to control urging force applied to the above coil spring, the opening characteristics of the expansion valve can be controlled with simple constitution.

Since the opening characteristics of the expansion valve are controlled stepwise, control is easy and there is no possibility of hunching, thereby making it possible to control the opening characteristics of the expansion valve stably.

Since the actuator for driving the control means is a stepping motor, a small-sized and inexpensive expansion valve can be manufactured.

Also, the expansion valve can be further reduced in size as the rotor of the stepping motor is internal to the expansion valve and air-tightness can be secured without fail as there is no O ring in the movable section.

## Claims

1. An expansion valve(25) comprising a valve(5) provided in the passage of a refrigerant supplied from the outlet side of a condenser(22), a diaphragm unit(16) for controlling the opening of the valve(5) according to a pressure difference between two pressure chambers(16b,16c) separated by a diaphragm(16a) according to a change in the superheat degree of the refrigerant at the outlet of an evaporator(26), and a coil spring(18) for urging the valve(5) in a closing direction, wherein
means(29) of detecting the environmental load of a refrigerating cycle and means(11) of controlling urging force applied to the coil spring(8) according to the detected load are provided to control the opening characteristics of the expansion valve(25).

2. The expansion valve(25) of claim 1 which is connected to an actuator(12) for driving the control means(11).

3. The expansion valve(25) of claim 2, wherein the opening characteristics of the expansion valve are controlled stepwise.

4. The expansion valve of claim 3, wherein the actuator for driving the control means(11) is a stepping motor(12).

5. The expansion valve(25) of claim 4, wherein the rotor(31) of the stepping motor(12) is built in the expansion valve.
